# EUROPÄISCHE PATENTSCHRIFT

(11) **EP 2 719 602 B1**
(45) Veröffentlichungstag und Bekanntmachung des Hinweises auf die Patenterteilung: **16.09.2015**
(21) Anmeldenummer: 13187295.4
(22) Anmeldetag: 04.10.2013
(51) Int. Cl.: B62B 3/06, B66F 9/065

(54) **Flurförderzeug mit in Lastrollenträgern angeordneten Lastrollen an einem Radarm**
Industrial truck with load rollers arranged in load roller mounts on a wheel arm
Chariot de manutention doté de galets de charge agencés dans des supports de galets de charge au niveau d'un bras de roue

(30) Priorität: 15.10.2012 DE 102012109789; 17.01.2013 DE 102013100468
(43) Veröffentlichungstag der Anmeldung: 16.04.2014
(73) Patentinhaber: OM Carrelli Elevatori S.p.A., 20020 Lainate (MI) (IT)
(72) Erfinder: Mariotti, Fabio, 42016 Guastalla (IT)
(74) Vertreter: Geirhos, Johann

(56) Entgegenhaltungen:
- WO-A1-02/100760
- WO-A1-2013/055214
- GB-A- 667 585
- US-A- 2 783 905
- US-A- 3 392 858

## Beschreibung

Die Erfindung betrifft ein Flurförderzeug, insbesondere Hubwagen, mit einem Antriebsteil und einem relativ zum Antriebsteil anhebbaren Lastteil, wobei der Lastteil zumindest einen anhebbaren und absenkbaren Radarm aufweist, der mit mindestens einer Lastrolle versehen ist, wobei die Lastrolle in einem Lastrollenträger drehbar gelagert ist und der Lastrollenträger mittels einer Schwenklagerung an dem Radarm schwenkbar gelagert ist, und wobei die Oberseite des Radarms eine Lasttragfläche bildet, mit der eine Palette unterfahren und angehoben wird.

Bekannte Flurförderzeuge mit Radarmen dienen dazu, mit den Radarmen unter eine Palette zu fahren und die Palette anzuheben. Zum Anheben der Palette werden die Radarme angehoben. Hierzu wird der Lastteil relativ zu dem Antriebsteil angehoben bzw. abgesenkt, wobei schwenkbar an den Radarmen angeordneten Lastrollenträger, in denen die Lastrollen gelagert sind, über eine Hebelanordnung und ein Gestänge betätigt und somit nach unten ausgeschwenkt bzw. nach oben eingeschwenkt werden, um die Radarme anzuheben bzw. abzusenken. Eine derartige Hubbewegung wird bei Niederhubwagen bzw. Kommissionieren als Niederhub bezeichnet bzw. bei Hochhubwagen mit einem zusätzlichen Hubgerüst als Initialhub.

Gattungsgemäße Hubwagen mit in schwenkbaren Lastrollenträgern angeordneten Lastrollen an den Radarmen, die mittels eines Gestänges und einer Hebelanordnung betätigt werden, sind beispielsweise aus der EP 1 690 823 B1 oder der DE 10 2009 033 709 A1 bekannt. Bekannte Hubwagen sind für die Handhabung von standardisierten Europlatten ausgeführt, die eine Einfahrhöhe für die Radarme von 100mm aufweisen und hierzu in der vollständig abgesenkten Stellung eine Radarmhöhe der Radarme im Bereich von ca. 85mm aufweisen.

In der abgesenkten Stellung der Radarme kann mit den Radarmen in Aufnahmeöffnungen einer auf dem Boden abgestellten Palette eingefahren werden. Bei Paletten, insbesondere Sonderpaletten mit einer gegenüber Europalatten verringerten Einfahrhöhe der Aufnahmeöffnungen kann es hierbei vorkommen, dass die Radarme mit der Oberseite, die eine Lasttragfläche bildet, mit der die Palette aufgenommen und angehoben wird, an der Unterseite der Palette entlang gleitet, so dass beim Einfahren der Radarme unter die Palette eine hohe Reibung auftritt und somit hohe Kräfte erforderlich sind und die Palette unter Umständen beschädigt wird. Dies kann insbesondere Auftreten, wenn sich die Palette unter einer Last durchbiegt oder beschädigt ist und dadurch die Einfahrhöhe der Aufnahmeöffnungen der Palette, die sich von der Fahrbahnoberfläche bis zur Unterseite einer Lasttragfläche der Palette erstreckt, verringert ist.

Aus der US 2 783 905 A ist ein Flurförderzeug mit einer nicht anhebbaren Lasttragplattform bekannt. An der Lasttragplattform sind Lastrollen drehbar angeordnet, mit denen sich die Lasttragplattform auf einer Fahrbahn abstützt. Eine Deichsel ist an der Lasttragplattform verschwenkbar und längsverschiebbar angeordnet. Mit der Deichsel steht ein hakenförmiger Aufnehmer in Wirkverbindung. Um mit dem Flurförderzeug eine Last auf die Lasttragpattform aufzunehmen, wird die Deichsel an die Rollen verschoben, so dass der Aufnehmer unter eine Last geschoben werden kann. Anschließend wird die Deichsel und somit der Aufnehmer verschwenkt, so dass die Last angekippt wird und die Lasttragplattform unter die angekippte Last geschoben werden kann. Anschließend kann die Deichsel wieder zurückverschwenkt werden, so dass die Last mittels des Aufnehmers auf die Lasttragplattform abgesenkt wird.

Der vorliegenden Erfindung liegt die Aufgabe zugrunde, ein Flurförderzeug der eingangs genannten Gattung zur Verfügung zu stellen, das Paletten mit einer geringen Einfahrhöhe sicher und mit geringen Kräften unterfahren kann.

Diese Aufgabe wird erfindungsgemäß dadurch gelöst, dass im Bereich der Schwenklagerung des Lastrollenträgers an der Oberseite des Radarms eine Einfahrhilfe angeordnet ist, die das Unterfahren einer Palette erleichtert und die von mindestens einer drehbar am Radarm gelagerten Rolle gebildet ist, die die Lasttragfläche an der Oberseite des Radarms überragt. Mit einer oder mehreren an der Oberseite des Radarms angeordneten Rolle, die an dem Radarm drehbar gelagert ist und die von der Oberseite des Radarms gebildete Lasttragfläche in vertikaler Richtung nach oben geringfügig überragt, kann auf einfache Weise eine Einfahrhilfe gebildet werden, mit der das Unterfahren einer Palette und das Einfahren der Radarme in die

Aufnahmeöffnungen der Palette erleichtert wird. Die drehbar gelagerte Rolle kann bei entsprechend verringerter Einfahrhöhe, beispielsweise bei beschädigter Palette oder unter Last durchgebogener Palette, mit der Unterseite der Lasttragfläche der Palette in Kontakt gelangen, wobei mittels der drehbaren Rolle bzw. Rollen eine geringe Reibung und somit geringe Kräfte beim Einfahren der Radarme in die Aufnahmeöffnungen der Palette erzielt werden, Beschädigungen an der Palette beim Einfahren der Radarme verhindert werden und die Palette sicher aufgenommen werden kann.

Die erfindungsgemäßen an der Oberseite der Radarme angeordneten drehbaren Rollen können an geeigneten Lagerungen an dem Radarm drehbar gelagert werden.

Gemäß einer vorteilhaften Ausführungsform der Erfindung umfasst die Schwenklagerung des Lastrollenträgers einen im Radarm angeordneten Lagerbolzen, wobei die mindestens eine Rolle auf dem Lagerbolzen drehbar gelagert ist. Der Lagerbolzen, der den Lastrollenträger in dem Radarm schwenkbar lagert, dient somit ebenfalls zur Lagerung der mindestens einen Rolle der Einfahrhilfe. Hierdurch wird eine bauraumsparende und platzgünstige Lagerung der Rollen ermöglicht, die eine geringe Bauhöhe der Radarme in der abgesenkten Stellung ermöglicht.

Sofern der Lastrollenträger zwei seitliche Lagerhebel aufweist, in denen jeweils ein äußeres Lagerauge für den Lagerbolzen ausgebildet ist, ist zweckmäßigerweise die mindestens eine Rolle zwischen den Lagerhebeln angeordnet. Mit einer Anordnung der drehbaren Rollen zwischen den beiden seitlichen Lagerhebeln des Lastrollenträgers kann eine bezüglich des Radarms in Fahrzeugquerrichtung mittige Anordnung der mindestens einen Rolle erzielt werden, die ein leichtes Einfahren der Radarme in die Aufnahmeöffnungen der Palette erleichtert.

Mit besonderem Vorteil ist der Lagerbolzen abwechselnd in einem Lagerauge des Radarms und einem Lagerauge des Lastrollenträgers gelagert und ist eine Rolle in Längsrichtung des Lagerbolzens zwischen dem Lagerauge des Radarms und dem Lagerauge des Lastrollenträgers angeordnet. Mit einer derartigen Anordnung der Lageraugen in dem Radarm sowie dem Lastrollenträger kann eine Lagerung des Lagerbolzens an mehr als zwei Lagerpunkten an dem Radarm erzielt werden, die eine Verringerung des Durchmessers des Lagerbolzens ohne Gefahr der Durchbiegung des Lagerbolzens und bei geringen Belastungen durch die auftretenden Kräfte ermöglicht, wodurch eine geringe Bauhöhe der Radarme in der abgesenkten Stellung ermöglicht wird. Die Anordnung von mehreren Rollen jeweils zwischen einem Lagerauge des Radarms und einem benachbarten Lagerauge des Lastrollenträgers führt zu einem einfachen Aufbau und einer einfachen Lagerung der Rollen und erleichtert das Einfahren der Radarme in die Aufnahmeöffnungen der Palette in besonders wirksamer Weise.

Mit besonderem Vorteil weist der Lastrollenträger zwei äußere Lageraugen und ein mittleres Lagerauge für den Lagerbolzen auf, wobei ein Lagerauge des Radarm jeweils zwischen dem mittleren Lagerauge und dem äußeren Lagerauge des Lastrollenträgers angeordnet ist und jeweils eine Rolle zwischen dem Lagerauge des Radarms und dem mittleren Lagerauge sowie dem äußeren Lagerauge des Lastrollenträgers angeordnet ist. Mit einem zusätzlichen mittleren Lagerauge für den Lagerbolzen an dem Lastrollenträger und zusätzlichen Lageraugen für den Lagerbolzen an dem Radarm, die jeweils zwischen dem mittleren Lagerauge und dem äußeren Lagerauge des Lastrollenträgers angeordnet sind, ist eine Lagerung des Lagerbolzens erzielbar, die eine besonders effektive Verringerung des Durchmessers des Lagerbolzens ermöglicht, um eine geringe Bauhöhe der Radarme in der abgesenkten Stellung zu erzielen. Sofern jeweils eine Rolle zwischen dem Lagerauge des Radarms und dem mittleren Lagerauge sowie dem äußeren Lagerauge des Lastrollenträgers angeordnet ist, wird somit eine Einführhilfe mit insgesamt vier drehbaren Rollen erzielt, die das Einfahren der Radarme in die Aufnahmeöffnungen der Palette in besonders wirksamer Weise ermöglicht.

Gemäß einer bevorzugten Weiterbildung der Erfindung ist zwischen dem Lastrollenträger und dem Radarm ein Anschlagmittel für die abgesenkte Stellung des Radarms ausgebildet. Mit einem derartigen Anschlagmittel zwischen dem Lastrollenträger und dem Radarm kann die Schwenkbewegung des Lastrollenträgers in der abgesenkten Stellung des Radarms, in der die Lastrollenträger in den Radarm nach oben eingeschwenkt sind, auf einfache Weise begrenzt werden und erzielt werden, dass zwischen der mindestens einen an dem Lagerbolzen gelagerten Rolle der Einfahrhilfe und dem den Lastrollenträger betätigenden Gestänge ein Freiraum verbleibt, der ein Drehen der Rolle ermöglicht. Beim Einfahren der Radarme in die Aufnahmeöffnungen der Palette kann hierdurch ein Abrollen der Rollen an der Palette sichergestellt werden, um geringe Reibung beim Einfahren der Radarme in die Palette zu erzielen.

Bei dem erfindungsgemäßen Flurförderzeug weist gemäß einer bevorzugten Ausführungsform der Radarm in der vollständig abgesenkten Stellung des Lastteils eine Radarmhöhe von unterhalb 50mm auf. In Verbindung mit der von den der mindestens einen Rolle gebildeten Einfahrhilfe an der Oberseite der Radarme können mit dem erfindungsgemäßen Flurförderzeug mit geringen Kräften Sonderpaletten, beispielsweise aus Papier oder Pappe bestehende Paletten, mit einer gegenüber Europaletten verringerten Einfahrhöhe mit den Radarmen unterfahren und angehoben werden sowie Beschädigungen an der Palette beim Unterfahren mit den Radarmen verhindert werden.

Die Erfindung betrifft weiterhin ein System bestehend aus einem Flurförderzeug mit einer Radarmhöhe des Radarms in der vollständig abgesenkten Stellung des Lastteils von höchstens 50mm und einer Sonderpalette, die eine Einfahrhöhe von Aufnahmeöffnungen für die Radarme des Flurförderzeugs von 50mm zwischen einer Fahrbahnoberfläche und einer Unterseite einer Lasttragfläche der Sonderpalette aufweist. Mit dem erfindungsgemäßen Flurförderzeug, das mit einer geringen Radarmhöhe der Radarme in der abgesenkten Stellung und der Einfahrhilfe versehen ist, können Sonderpaletten mit einer geringen Einfahrhöhe sicher und beschädigungsfrei gehandhabt werden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer schematischen Darstellung in der abgesenkten Stellung des Lastteils,
- Figur 2: das Flurförderzeug der Figur 1 bei vollständig angehobenem Lastteil,
- Figur 3: eine Ansicht der Spitze eines Radarms des erfindungsgemäßen Flurförderzeugs der Figuren 1 und 2 von oben,
- Figur 4: einen Schnitt entlang der Linie A-A der Figur 3,
- Figur 5: eine Seitenansicht der Spitzes des Radarms und
- Figur 6: einen Schnitt entlang der Linie B-B der Figur 5.

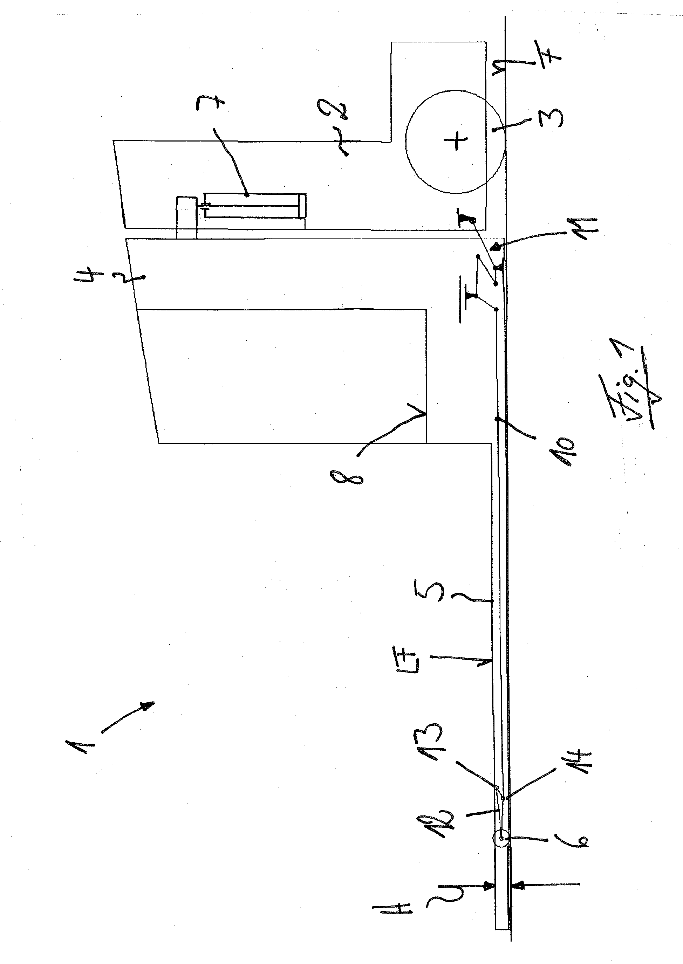

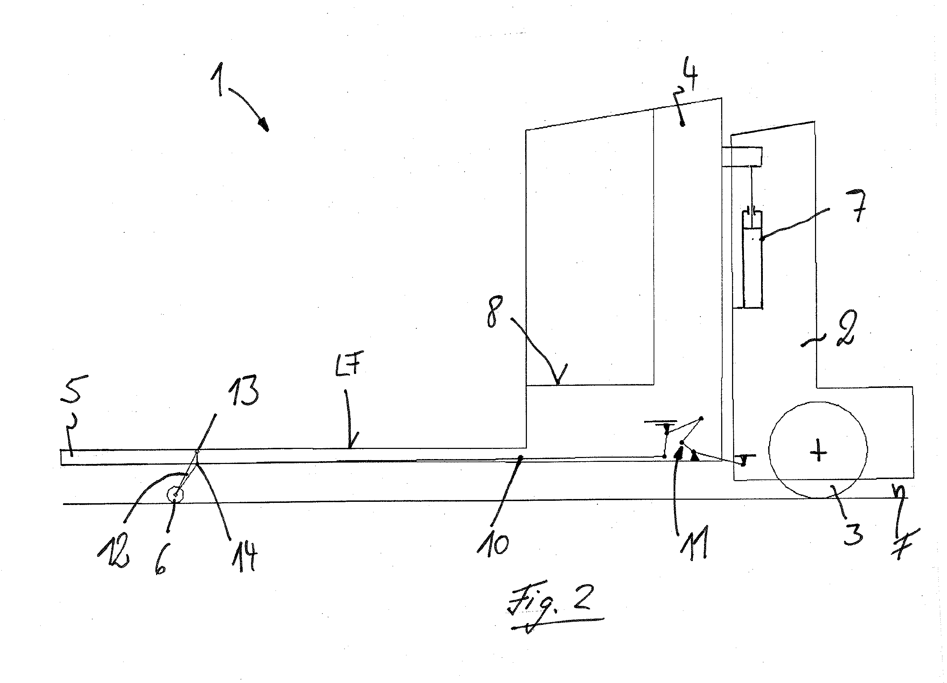

Das in den Figuren 1 und 2 in einer Seitenansicht dargestellte Flurförderzeug 1, beispielsweise ein als Niederhubwagen oder Hochhubwagen ausgebildeter Hubwagen, weist einen Antriebsteil 2, der mit einem lenkbaren Antriebsrad 3 versehen ist, und einen relativ zum Antriebsteil 2 anhebbaren Lastteil 4 auf. Der Lastteil 4 umfasst bevorzugt zwei seitlich beabstandete Radarme 5, die sich mittels an der Spitze des jeweiligen Radarms 5 angeordneten Lastrollen 6 auf einer Fahrbahn F abstützen. Der Antriebteil 2 ist mittels des Antriebrades 3 auf der Fahrbahn F abgestützt. Zur Erhöhung der Stabilität kann das Antriebsteil 2 mit nicht näher dargestellten Stützrollen auf der Fahrbahn F abgestützt sein. Die Oberseite der Radarme 5 bilden eine Lasttragfläche LF, mit der eine nicht näher dargestellte Palette unterfahren und angehoben werden kann.

Zum Anheben des Lastteils 4 ist eine Hubeinrichtung 7, beispielsweise ein oder mehrere Hydraulikzylinder, vorgesehen, die zwischen dem Antriebsteil 2 und dem Lastteil 4 angeordnet ist. Um die Hubbewegung des Lastteils 4 auf die Lastrollen 6 an den Enden der Radarme 5 zu übertragen, ist für jeden Radarm 5 ein mit den Lastrollen 6 in Wirkverbindung stehendes Gestänge 10 und eine das Gestänge 10 betätigende Hebelanordnung 11 vorgesehen. Die Hebelanordnung 11 kann weiterhin als Führung zur Führung des Lastteils 4 bei der Hub- und Senkbewegung dienen.

Das Lastteil 4 kann weiterhin bei einem batterie-elektrisch betriebenen Flurförderzeug 1 ein Batteriefach 8 für eine Traktionsbatterie umfassen, die einen elektrischen Fahrantrieb des Antriebsrades 3 und einen elektrischen Antrieb der Hubeinrichtung 7 mit elektrischer Energie versorgt.

Die Lastrollen 6 sind in Lastrollenträgern 12 drehbar angeordnet, die an dem entsprechenden Radarm 5 schwenkbar angeordnet sind. Zur schwenkbaren Lagerung der Lastrollenträger 12 an dem jeweiligen Radarm 5 ist jeweils eine Schwenklagerung 13 vorgesehen. Im dargestellten Ausführungsbeispiel sind die Gestänge 10 als Zugstangen ausgebildet, wobei die Schwenklagerung 13 im vertikal oberen Bereich der Radarme 5 angeordnet ist und die als Zugstangen ausgebildeten Gestänge 10 in vertikaler Richtung unterhalb der Schwenklagerung 13 mittels Koppelpunkten 14 gelenkig mit dem Lastrollenträger 12 verbunden sind.

Beim Anheben des Lastteils 4 mittels der Hubeinrichtung 7 werden die mittels der Hebelanordnung 11 und des Gestänges 10 betätigten Lastrollenträger 12, die mit den Lastrollen 6 versehen sind, - wie in der Figur 2 verdeutlicht ist, die den Lastteil 4 in der vollständig angehobenen Stellung zeigt - im Gegenuhrzeigersinn nach unten um die Schwenklagerung 13 ausgeschwenkt, so dass die Radarme 5 nach oben angehoben werden. Entsprechend werden beim Absenken des Lastteils die Lastrollenträger 12 im Uhrzeigersinn um die Schwenklagerung 13 eingeschwenkt, so dass sich die Radarme 5 absenken.

Die Radarme 5 des erfindungsgemäßen Flurförderzeugs 1 weisen in der vollständig abgesenkten Stellung des Lastteils 4 eine Radarmhöhe H von weniger als 50mm auf, so dass mit dem erfindungsgemäßen Flurförderzeug 1 Sonderpaletten gehandhabt werden können, die eine Einfahrhöhe für die Radarme 5 von 50mm aufweisen.

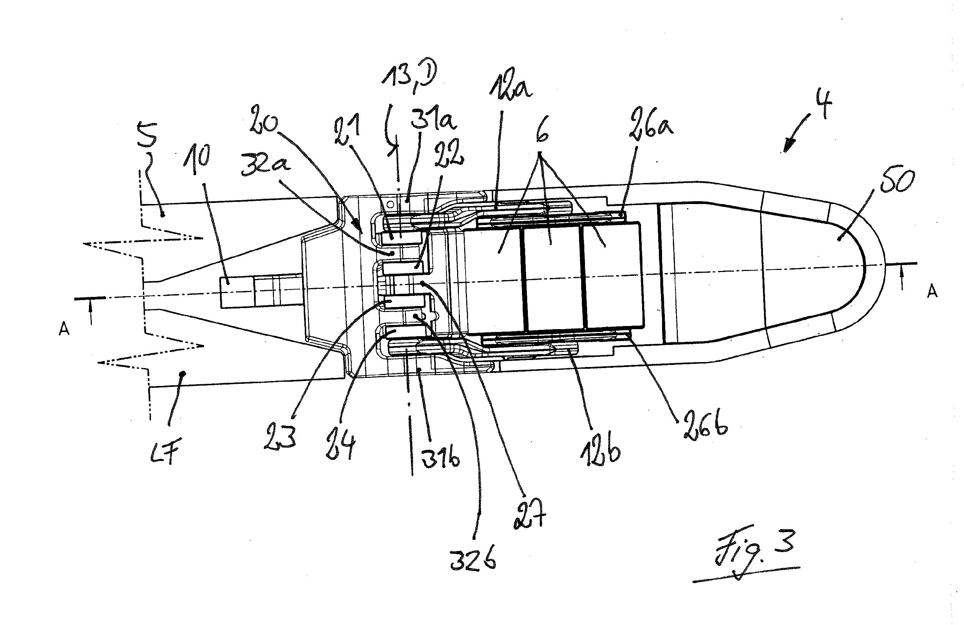

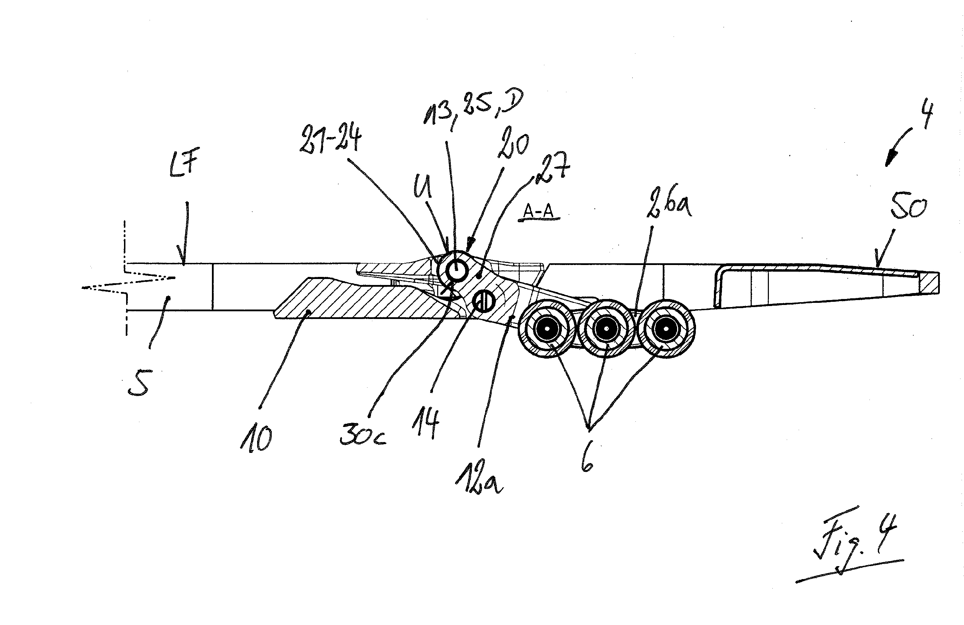

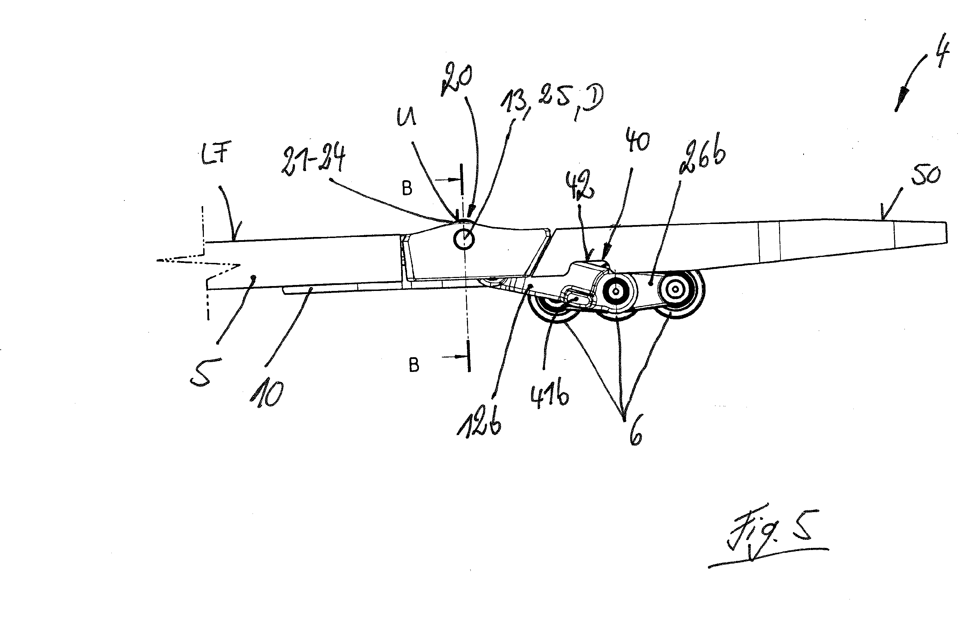

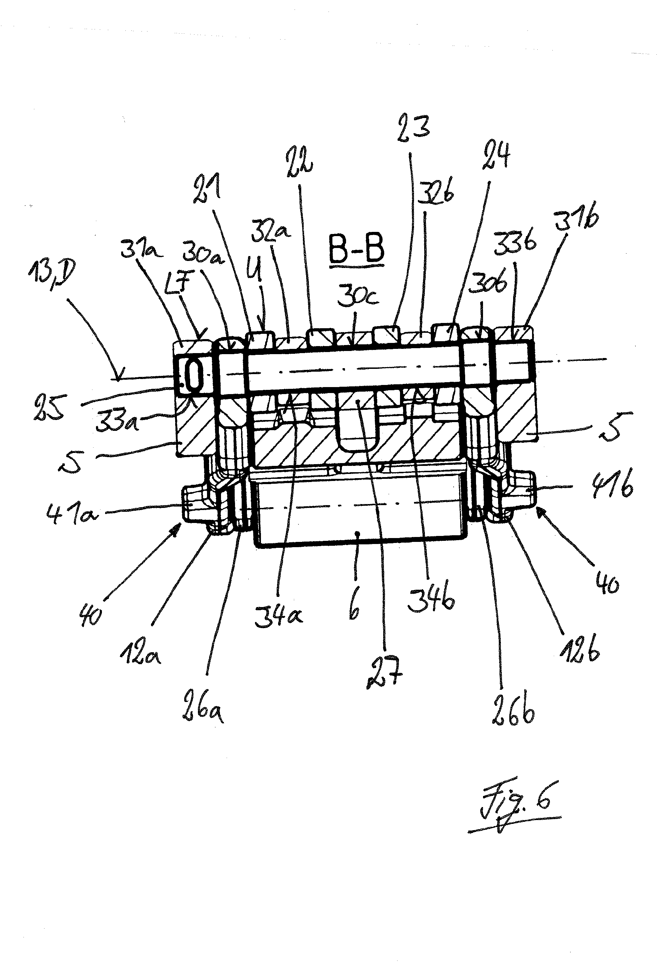

In den Figuren 3 bis 6 ist eine konstruktive Ausführung der Radarme 5 des Flurförderzeugs 1 der Figuren 1 und 2 dargestellt.

Das erfindungsgemäße Flurförderzeug 1 ist im Bereich der Schwenklagerung 13 des Lastrollenträgers 12 an der Oberseite des jeweiligen Radarms 5 mit einer Einfahrhilfe 20 zur Erleichterung des Unterfahrens der Palette versehen, die von mindestens einer drehbar am Radarm 5 gelagerten Rolle 21, 22, 23, 24 gebildet ist. Die Rollen 21, 22, 23, 24 sind um eine in Fahrzeugquerrichtung angeordnete Drehachse D an den Radarmen 5 gelagert. Die Rollen 21, 22, 23, 24 weisen einen derartigen Durchmesser auf, dass die Umfangsfläche U der Rollen 21, 22, 23, 24 die Lasttragfläche LF an der Oberseite des entsprechenden Radarms 5 geringfügig überragt.

Im dargestellten Ausführungsbeispiel umfasst die Schwenklagerung 13 des Lastrollenträgers 12 an dem Radarm 5 einen Lagerbolzen 25 und sind die Rollen 21, 22, 23, 24 der Einfahrhilfe 20 auf dem Lagerbolzen 25 drehbar gelagert. Die Längsachse des Lagerbolzens 25 bildet somit die Drehachse D der Rollen 21, 22, 23, 24.

Um die geringe Radarmhöhe H von weniger als 50mm in der abgesenkten Stellung zu erzielen, ist der Lagerbolzen 25 in mehreren Lagerpunkten, im dargestellten Ausführungsbeispiel in vier Lagerpunkten, an dem Radarm 5 abgestützt, so dass der Lagerbolzen 25 mit einem geringen Durchmesser ausgeführt werden kann.

Hierzu weist der gabelförmige Lastrollenträger 12 zwei seitliche, äußere Lagerhebel 12a, 12b auf, zwischen denen Wippen 26a, 26b schwenkbar gelagert sind, in denen die Lastrollen 6, im vorliegenden Ausführungsbeispiel drei Lastrollen 6, drehbar gelagert sind. Zusätzlich ist der Lastrollenträger 12 im Bereich der Schwenklagerung 13 mit einem mittigen zusätzlichen Steg 27 versehen.

Zur Lagerung des Lagerbolzens 25 ist in den äußeren Lagerhebeln 12a, 12b des Lastrollenträgers 12 jeweils ein äußeres Lagerauge 30a, 30b und in dem mittigen Steg 27 ein mittiges Lagerauge 30c ausgebildet.

Der Radarm 5 ist zur Lagerung des Lagerbolzens 25 an den Außenseiten mit jeweils einer Lagergabel versehen, die jeweils einen äußeren Lagerflansch 31 a, 31 b und einen inneren Lagerflansch 32a, 32b für den Lagerbolzen 25 bilden. In den äußeren Lagerflanschen 31 a, 31 b des Radarms 5 ist jeweils ein äußeren Lagerauge 33a, 33b und in den inneren Lagerflanschen 32a, 32b des Radarms 5 jeweils ein inneres Lagerauge 34a, 34b zur Aufnahme des Lagerbolzens 25 ausgebildet.

Der Lagerbolzen 25 ist abwechselnd in einem Lagerauge des Radarms 5 und einem Lagerauge des Lastrollenträgers 12 gelagert. Hierzu sind die äußeren, in den Lagerhebeln 12a, 12b des Lastrollenträgers 12 ausgebildeten Lageraugen 30a, 30b in Längsrichtung des Lagerbolzens 25 jeweils zwischen den äußeren Lageraugen 33a, 33b und den inneren Lageraugen 34a, 34b des Radarms 5 angeordnet. Weiterhin ist das an dem mittigen Steg 27 ausgebildete mittige Lagerauge 30c des Lastrollenträgers 12 zwischen den beiden inneren Lageraugen 34a, 34b des Radarms 5 angeordnet. Die beiden inneren Lageraugen 34a, 34b und somit die inneren Lagerflansche 32a, 32b des Radarms 5 sind somit jeweils zwischen dem äußeren Lageraugen 30a, 30b und somit dem äußeren Lagerhebel 12a, 12b des Lastrollenträgers 12 und dem mittigen Lagerauge 30c und somit dem mittigen Steg 27 des Lastrollenträgers 12 angeordnet.

Die Rollen 21, 22, 23, 24 der Einfahrhilfe 20 sind in Längsrichtung des Lagerbolzens 25 zwischen den äußeren Lagerhebeln 12a, 12b des Lastrollenträgers 12 angeordnet. Weiterhin sind die Rollen 21, 22, 23, 24 in Längsrichtung des Lagerbolzens 25 gesehen jeweils zwischen einem Lagerauge des Radarms 5 und einem Lagerauge des Lastrollenträgers 12 angeordnet. Im dargestellten Ausführungsbeispiel ist jeweils eine Rolle zwischen dem mit dem inneren Lagerauge 34a, 34b versehenen inneren Lagerflansch 32a, 32b des Radarms 5 und dem mit dem mittleren Lagerauge 30c versehenen mittigen Steg 27 des Lastrollenträgers 12 sowie zwischen dem mit dem inneren Lagerauge 34a, 34b versehenen inneren Lagerflansch 32a, 32b des Radarms 5 und dem mit dem äußeren Lagerauge 30a, 30b versehenen äußeren Lagerhebel 12a, 12b des Lastrollenträgers 12 angeordnet, so dass jeweils zwei Rollen paarweise an beiden Seiten des inneren Lagerauges 34a, 34b und somit des inneren

Lagerflansches 32a, 32b des Radarms 5 angeordnet sind. Die Rolle 21 ist somit zwischen dem äußeren Lagerhebel 12a des Lastrollenträgers 12 und dem inneren Lagerflansch 32a des Radarms 5, die Rolle 22 zwischen dem inneren Lagerflansch 32a des Radarms 5 und dem mittigen Steg 27 des Lastrollenträgers 12, die Rolle 23 zwischen dem mittigen Steg 27 des Lastrollenträgers 12 und dem inneren Lagerflansch 32b des Radarms 5 und die Rolle 24 zwischen dem inneren Lagerflansch 32b des Radarms 5 und dem äußeren Lagerhebel 12b des Lastrollenträgers 12 angeordnet.

Zwischen dem Lastrollenträger 12 und dem Radarm 5 ist weiterhin ein Anschlagmittel 40 für die abgesenkte Stellung des Radarms 5 ausgebildet. Das Anschlagmittel 40 ist von flügelartigen Erweiterungen 41 a, 41 b an den Außenseiten der Lagerhebel 12a, 12b des Lastrollenträgers 12 gebildet, die mit Anschlagflächen 42 an Seitenwangen des Radarms 5 zusammenwirken. Die Anschlagmittel 40 begrenzen die Schwenkbewegung der Lastrollenträger 12 nach oben in der vollständig abgesenkten Stellung der Radarme 5 und ermöglichen in Verbindung mit einer entsprechenden Gestaltung des den entsprechenden Lastrollenträger 12 betätigenden Gestänges 10, dass in der vollständig abgesenkten Stellung ein Freiraum zwischen den Rollen 21, 22, 23, 23 und dem Gestänge 10 verbleibt, der eine Drehen der Rollen 21, 22, 23, 24 auf dem Lagerbolzen 25 ermöglicht.

Die Radarme 5 sind an der Spitze zudem mit einer nach vertikal unten gerichteten Abschrägung 50 versehen, die das Einfahren in die Aufnahmeöffnungen der Palette erleichtert.

Wenn mit vollständig abgesenkten Radarmen 5 in die Aufnahmeöffnungen einer auf der Fahrbahn F abgestellten Palette eingefahren wird, kann mit den Rollen 21, 22, 23, 24 eine geringe Reibung zwischen den Radarmen 5 und der Palette erzielt werden. Die drehbaren Rollen 21, 22, 23, 24 können hierbei mit der Unterseite der Lasttragfläche der Palette in Kontakt gelangen und verringern die auftretende Reibung und somit geringe Kräfte beim Einfahren der Radarme 5 in die Aufnahmeöffnungen der Palette. Bei einer verringerter Einfahrhöhe, beispielsweise bei beschädigter Palette oder unter Last durchgebogener Palette, oder bei Sonderpaletten mit einer geringen Einfahrhöhe, bei denen zwischen der Radarmhöhe H und der Einfahrhöhe nur geringe Toleranzen vorgesehen sind, kann mit der erfindungsgemäßen Einfahrhilfe 20, die von den drehbar an der Oberseite der Radarme 5 angeordneten Rollen 21, 22, 23, 24 gebildet ist, eine Beschädigungen an der Palette beim Einfahren der Radarme 5 verhindert werden sowie die Paletten sicher aufgenommen werden.

## Patentansprüche

1. Flurförderzeug (1), insbesondere Hubwagen, mit einem Antriebsteil (2) und einem relativ zum Antriebsteil (2) anhebbaren Lastteil (4), wobei der Lastteil (4) zumindest einen anhebbaren und absenkbaren Radarm (5) aufweist, der mit mindestens einer Lastrolle (6) versehen ist, wobei die Lastrolle (6) in einem Lastrollenträger (12) drehbar gelagert ist und der Lastrollenträger (12) mittels einer Schwenklagerung (13) an dem Radarm (5) schwenkbar gelagert ist und wobei die Oberseite des Radarms (5) eine Lasttragfläche (LF) bildet, mit der eine Palette unterfahren und angehoben wird, **dadurch gekennzeichnet, dass** im Bereich der Schwenklagerung (13) des Lastrollenträgers (12) an der Oberseite des Radarms (5) eine Einfahrhilfe (20) angeordnet ist, die das Unterfahren einer Palette erleichtert und die von mindestens einer drehbar am Radarm (5) gelagerten Rolle (21; 22; 23; 24) gebildet ist, die die Lasttragfläche (LF) an der Oberseite des Radarms (5) überragt.

2. Flurförderzeug nach Anspruch 1, **dadurch gekennzeichnet, dass** die Schwenklagerung (13) des Lastrollenträgers (12) einen im Radarm (5) angeordneten Lagerbolzen (25) umfasst, wobei die mindestens eine Rolle (21; 22; 23; 24) auf dem Lagerbolzen (25) drehbar gelagert ist.

3. Flurförderzeug nach Anspruch 2, **dadurch gekennzeichnet, dass** der Lastrollenträger (12) zwei seitliche Lagerhebel (12a, 12b) aufweist, in denen jeweils ein äußeres Lagerauge (30a, 30b) für den Lagerbolzen (25) ausgebildet ist, wobei die mindestens eine Rolle (21; 22; 23; 24) zwischen den Lagerhebel (12a, 12b) angeordnet ist.

4. Flurförderzeug nach Anspruch 2 oder 3, **dadurch gekennzeichnet, dass** der Lagerbolzen (25) abwechselnd in einem Lagerauge (33a; 33b; 34a; 34b) des Radarms (5) und einem Lagerauge (30a; 30b; 30c) des Lastrollenträgers (12) gelagert ist und die Rolle (21; 22; 23; 24) in Längsrichtung des Lagerbolzens (25) zwischen dem Lagerauge (33a; 33b; 34a; 34b) des Radarms (5) und dem Lagerauge (30a; 30b; 30c) des Lastrollenträgers (12) angeordnet ist.

5. Flurförderzeug nach einem der Ansprüche 2 bis 4, **dadurch gekennzeichnet, dass** der Lastrollenträger (12) zwei äußere Lageraugen (30a, 30b) und ein mittleres Lagerauge (30c) für den Lagerbolzen (25) aufweist, wobei ein Lagerauge (34a; 34b) des Radarms (5) jeweils zwischen dem mittleren Lagerauge (30c) und dem äußeren Lagerauge (30a, 30b) des Lastrollenträgers (20) angeordnet ist und jeweils eine Rolle (21; 22; 23; 24) zwischen dem Lagerauge (34a; 34b) des Radarms (5) und dem mittleren Lagerauge (30c) des Lastrollenträgers (12) sowie zwischen dem Lagerauge (34a; 34b) des Radarms (5) und dem äußeren Lagerauge (30a, 30b) des Lastrollenträgers (12) angeordnet ist.

6. Flurförderzeug nach einem der Ansprüche 1 bis 5, **dadurch gekennzeichnet, dass** zwischen dem Lastrollenträger (12) und dem Radarm (5) ein Anschlagmittel (40) für die abgesenkte Stellung des Radarms (5) ausgebildet ist.

7. Flurförderzeug nach einem der Ansprüche 1 bis 6, **dadurch gekennzeichnet, dass** der Radarm (5) in der vollständig abgesenkten Stellung des Lastteils (4) eine Radarmhöhe (H) von unterhalb 50mm aufweist.

8. System bestehend aus einem Flurförderzeug nach einem der vorangegangenen Ansprüche mit einer Radarmhöhe (H) des Radarms (5) in der vollständig abgesenkten Stellung des Lastteils (4) von höchstens 50mm und einer Sonderpalette, die eine Einfahrhöhe einer Aufnahmeöffnung für die Radarme (5) des Flurförderzeugs (1) von 50mm zwischen einer Fahrbahnoberfläche und einer Unterseite einer Lasttragfläche der Sonderpalette aufweist.

## Claims

1. Industrial truck (1), in particular pallet truck, with a drive part (2) and a load part (4) that can be raised relative to the drive part (2), wherein the load part (4) has at least one wheel arm (5) which can be raised and lowered and which is provided with at least one load roller (6), wherein the load roller (6) is pivotable mounted in a load roller mount (12), and the load roller mount (12) is swivable mounted on the wheel arm (5) by means of a pivot bearing arrangement (13), and wherein the upper side of the wheel arm (5) forms a load-carrying face (LF), with which a pallet is underridden and the pallet is raised, **characterized in that** an entry aid (20) is arranged in the region of the pivot bearing arrangement (13) of the load roller mount (12) on the upper side of the wheel arm (5), said entry aid facilitating the movement beneath a pallet and being formed by at least one roller (21; 22; 23; 24), which is pivotable mounted on the wheel arm (5) and protrudes beyond the load-carrying face (LF) on the upper side of the wheel arm (5).

2. Industrial truck according to Claim 1, **characterized in that** the pivot bearing arrangement (13) of the load roller mount (12) comprises a bearing bolt (25) arranged in the wheel arm (5), wherein the at least one roller (21; 22; 23; 24) is pivotable mounted on the bearing bolt (25).

3. Industrial truck according to Claim 2, **characterized in that** the load roller mount (12) has two lateral bearing levers (12a, 12b), in which in each case one outer bearing eyelet (30a, 30b) for the bearing bolt (25) is formed, wherein the at least one roller (21; 22; 23; 24) is arranged between the bearing levers (12a, 12b).

4. Industrial truck according to Claim 2 or 3, **characterized in that** the bearing bolt (25) is mounted alternately in a bearing eyelet (33a; 33b; 34a; 34b) of the wheel arm (5) and a bearing eyelet (30a; 30b; 30c) of the load roller mount (12) and the roller (21; 22; 23; 24) is arranged, in the longitudinal direction of the bearing bolt (25), between the bearing eyelet (33a; 33b; 34a; 34b) of the wheel arm (5) and the bearing eyelet (30a; 30b; 30c) of the load roller mount (12).

5. Industrial truck according to one of Claims 2 to 4, **characterized in that** the load roller mount (12) has two outer bearing eyelets (30a, 30b) and a central bearing eyelet (30c) for the bearing bolt (25), wherein a bearing eyelet (34a; 34b) of the wheel arm (5) is arranged in each case between the central bearing eyelet (30c) and the outer bearing eyelet (30a, 30b) of the load roller mount (20), and in each case one roller (21; 22; 23; 24) is arranged between the bearing eyelet (34a; 34b) of the wheel arm (5) and the central bearing eyelet (30c) of the load roller mount (12) and between the bearing eyelet (34a; 34b) of the wheel arm (5) and the outer bearing eyelet (30a, 30b) of the load roller mount (12).

6. Industrial truck according to one of Claims 1 to 5, **characterized in that** a stop means (40) for the lowered position of the wheel arm (5) is formed between the load roller mount (12) and the wheel arm (5).

7. Industrial truck according to one of Claims 1 to 6, **characterized in that** the wheel arm (5), in the completely lowered position of the load part (4) has a wheel arm height (H) of less than 50 mm.

8. System comprising an industrial truck according to one of the preceding claims with a wheel arm height (H) of the wheel arm (5) in the completely lowered position of the load part (4) of at most 50 mm and a non-standard pallet, which has an entry height of a pickup opening for the wheel arms (5) of the industrial truck (1) of 50 mm between a travel surface and a lower side of a load-carrying face of the non-standard pallet.

## Revendications

1. Chariot de manutention (1), en particulier chariot élévateur, avec une partie d'entraînement (2) et une partie de chargement (4) soulevable par rapport à la partie d'entraînement (2), dans lequel la partie de chargement (4) présente au moins un bras de roue soulevable et abaissable (5), qui est doté d'au moins un galet de charge (6), dans lequel le galet de charge (6) est monté de façon rotative dans un support de galets de charge (12) et le support de galets de charge (12) est monté de façon pivotante sur le bras de roue (5) au moyen d'un palier pivotant (13) et dans lequel le côté supérieur du bras de roue (5) forme une face de support de charge (L), avec laquelle une palette peut être engagée par-dessous et soulevée, **caractérisé en ce qu'**un auxiliaire d'introduction (20) est disposé dans la région du palier pivotant (13) du support de galets de charge (12) sur le côté supérieur du bras de roue (5), qui facilite l'engagement inférieur d'une palette et qui est formé par au moins un galet (21; 22; 23; 24) monté de façon rotative sur le bras de roue (5), qui dépasse la face de support de charge (LF) sur le côté supérieur du bras de roue (5).

2. Chariot de manutention selon la revendication 1, **caractérisé en ce que** le palier pivotant (13) du support de galets de charge (12) comprend un axe de palier (25) disposé dans le bras de roue (5), dans lequel ledit au moins un galet (21; 22; 23; 24) est monté de façon rotative sur l'axe de palier (25).

3. Chariot de manutention selon la revendication 2, **caractérisé en ce que** le support de galets de charge (12) présente deux leviers de palier latéraux (12a, 12b), dans lesquels il est respectivement formé un oeil de palier extérieur (30a, 30b) pour l'axe de palier (25), dans lequel ledit au moins un galet (21; 22; 23; 24) est disposé entre les leviers de palier (12a, 12b).

4. Chariot de manutention selon la revendication 2 ou 3, **caractérisé en ce que** l'axe de palier (25) est monté alternativement dans un oeil de palier (33a; 33b; 34a; 34b) du bras de roue (5) et dans un oeil de palier (30a; 30b; 30c) du support de galets de charge (12) et le galet (21; 22; 23; 24) est disposé dans la direction longitudinale de l'axe de palier (25) entre l'oeil de palier (33a; 33b; 34a; 34b) du bras de roue (5) et l'oeil de palier (30a; 30b; 30c) du support de galets de charge (12).

5. Chariot de manutention selon l'une quelconque des revendications 2 à 4, **caractérisé en ce que** le support de galets de charge (12) présente deux yeux de palier extérieurs (30a, 30b) et un oeil de palier médian (30c) pour l'axe de palier (25), dans lequel un oeil de palier (34a; 34b) du bras de roue (5) est disposé respectivement entre l'oeil de palier médian (30c) et l'oeil de palier extérieur (30a, 30b) du support de galets de charge (12) et un galet (21; 22; 23; 24) est disposé respectivement entre l'oeil de palier (34a; 34b) du bras de roue (5) et l'oeil de palier médian (30c) du support de galets de charge (12) ainsi qu'entre l'oeil de palier (34a; 34b) du bras de roue (5) et l'oeil de palier extérieur (30a, 30b) du support de galets de charge (12).

6. Chariot de manutention selon l'une quelconque des revendications 1 à 5, **caractérisé en ce qu'**un moyen de butée (40) pour la position abaissée du bras de roue (5) est disposé entre le support de galets de charge (12) et le bras de roue (5).

7. Chariot de manutention selon l'une quelconque des revendications 1 à 6, **caractérisé en ce que** le bras de roue (5) présente, dans la position complètement abaissée de la partie de chargement (4), une hauteur de bras de roue (H) de moins de 50 mm.

8. Système se composant d'un chariot de manutention selon l'une quelconque des revendications précédentes, avec une hauteur de bras de roue (H) du bras de roue (5) dans la position complètement abaissée de la partie de chargement (4) de 50 mm au maximum et d'une palette spéciale, qui présente une hauteur d'entrée d'une ouverture de réception pour les bras de roue (5) du chariot de manutention (1) de 50 mm entre une surface de chaussée et un côté inférieur d'une face de support de charges de la palette spéciale.
